# EUROPEAN PATENT APPLICATION

(11) **EP 4 815 284 A1**
(43) Date of publication of application: **30.09.2026**
(21) Application number: 26164570.9
(22) Date of filing: 13.03.2026
(51) Int. Cl.: H02M 1/32, H02M 7/5387, H01G 2/00

(54) **POWER CONVERTER AND CONTROL METHOD THEREFOR**

(30) Priority: 14.03.2025 CN 202510312188
(71) Applicant: HUAWEI TECHNOLOGIES CO., LTD., Shenzhen, Guangdong 518129 (CN)
(72) Inventor: LI, Junjie, Shenzhen 518129 (CN); ZHAO, Yazhu, Shenzhen 518129 (CN); LIU, Shuai, Shenzhen 518129 (CN); YU, Xinyu, Shenzhen 518129 (CN); XIN, Kai, Shenzhen 518129 (CN)
(74) Representative: Isarpatent

(57) **Abstract**

This application provides a power converter and a control method therefor. The power converter includes a capacitor, a power conversion circuit, and a controller, the power conversion circuit includes a positive direct current bus and a negative direct current bus, and the capacitor is connected between the positive direct current bus and the negative direct current bus. The controller is configured to reduce output power of the power converter when a total quantity of accumulated self-healing times of the capacitor meets a first preset condition; or the controller is configured to control, when a total quantity of accumulated self-healing times of the capacitor meets a second preset condition, the power converter to stop running. This application can reduce a probability that the capacitor undergoes self-healing. Therefore, a rate of capacitance degradation and mechanical damage of the capacitor can be reduced. In addition, because the probability that the capacitor undergoes self-healing is reduced, a possibility that the capacitor is in a severe self-healing state is reduced, and a possibility of triggering a direct current bus short circuit fault is reduced. This can reduce a possibility that the power converter is damaged due to propagation of the short circuit fault.

## Description

### TECHNICAL FIELD

This application relates to the field of power electronics, and in particular, to a power converter and a control method therefor.

### BACKGROUND

A power converter may run in a wide range of harsh scenarios with a high temperature, high humidity, and high smoke. When the power converter runs in the harsh scenarios for a long time, a capacitor of the power converter may undergo self-healing a plurality of times, resulting in capacitance degradation and mechanical damage of the capacitor, and affecting performance of the capacitor.

Currently, when the capacitor undergoes self-healing, the power converter is temporarily shut down through over current protection on a direct current side or bus undervoltage protection on a direct current side. The power converter is reconnected to a grid after the over current protection or undervoltage protection is eliminated. However, the power converter can be only temporarily shut down through the over current protection and undervoltage protection. The capacitor may still undergo self-healing after the power converter is reconnected to the grid, and long-term accumulation still results in capacitance degradation and mechanical damage of the capacitor. Particularly, when the capacitor is in a severe self-healing state, a direct current bus short circuit may be triggered, resulting in propagation of a short circuit fault and damage of the power converter.

### SUMMARY

This application provides a power converter and a control method therefor, to reduce a probability that a capacitor undergoes self-healing. Therefore, a rate of capacitance degradation and mechanical damage of the capacitor can be reduced. In addition, because the probability that the capacitor undergoes self-healing is reduced, a possibility that the capacitor is in a severe self-healing state is reduced, and a possibility of triggering a direct current bus short circuit fault is reduced. This can reduce a possibility that the power converter is damaged due to propagation of the short circuit fault.

According to a first aspect, a power converter is provided. The power converter includes a capacitor, a power conversion circuit, and a controller, the power conversion circuit includes a positive direct current bus and a negative direct current bus, and the capacitor is connected between the positive direct current bus and the negative direct current bus; and the controller is configured to reduce output power of the power converter when a total quantity of accumulated self-healing times of the capacitor meets a first preset condition; or the controller is configured to control, when a total quantity of accumulated self-healing times of the capacitor meets a second preset condition, the power converter to stop running.

When the power converter runs at a high temperature for a long time, the capacitor of the power converter easily undergoes self-healing, easily resulting in capacitance degradation and mechanical damage of the capacitor, and affecting performance of the capacitor. In this embodiment of this application, the controller reduces the output power of the power converter when the total quantity of accumulated self-healing times of the capacitor meets the first preset condition, to reduce heat generated by the power converter. A possibility that the capacitor undergoes self-healing is positively correlated with a temperature of the power converter. Therefore, when the output power of the power converter is reduced, the possibility that the capacitor undergoes self-healing can be reduced, and a rate of capacitance degradation and mechanical damage of the capacitor can be reduced. In addition, because the probability that the capacitor undergoes self-healing is reduced, a possibility that the capacitor is in a severe self-healing state is reduced, and a possibility of triggering a direct current bus short circuit fault is reduced. This can reduce a possibility that the power converter is damaged due to propagation of the short circuit fault.

Alternatively, the controller can control, when the total quantity of accumulated self-healing times of the capacitor meets the second preset condition, the power converter to stop running. Because the power converter is in a non-running state or a non-operating state, the power converter does not generate heat. Therefore, a possibility that the capacitor of the power converter further undergoes self-healing is reduced. Compared with a solution in which transient protection is performed through over current protection or undervoltage protection but the capacitor may still undergo self-healing after the power converter is reconnected to a grid, this application is equivalent to cutting off heat generation from a source. In this way, a possibility that the capacitor of the power converter undergoes self-healing can be reduced, and a possibility of triggering a direct current bus short circuit fault is reduced. This can reduce a possibility that the power converter is damaged due to propagation of the short circuit fault.

With reference to the first aspect, in an embodiment, the first preset condition is specifically that the total quantity of accumulated self-healing times is greater than a first preset threshold and less than a second preset threshold.

When the total quantity of accumulated self-healing times is greater than the first preset threshold and less than the second preset threshold, it indicates that the quantity of times that the capacitor undergoes self-healing is relatively large, which is equivalent to that the capacitor is in a moderate self-healing state. A health status of the capacitor needs to be considered more than a power consumption requirement of an alternating current load. A reason is as follows: Because the quantity of times that the capacitor undergoes self-healing is relatively large, if the power converter is controlled to continue to output an alternating current or a direct current with original power, the health status of the capacitor is more likely to deteriorate. Consequently, the capacitor changes to the severe self-healing state, and the direct current bus short circuit fault may be triggered. Therefore, in this case, the controller can reduce the output power of the power converter, to reduce the probability that the capacitor undergoes self-healing.

With reference to the first aspect, in an embodiment, the second preset condition is specifically that the total quantity of accumulated self-healing times is greater than or equal to the second preset threshold.

When the total quantity of accumulated self-healing times is greater than or equal to the second preset threshold, it indicates that the quantity of times that the capacitor undergoes self-healing is very large. In this case, a health status of the capacitor is very poor. If the controller controls the power converter to continue running, the capacitor may undergo self-healing again, and a direct current bus short circuit may be triggered, resulting in propagation of the short circuit fault and damage of the power converter. Therefore, when the total quantity of accumulated self-healing times of the capacitor is greater than or equal to the second preset threshold, the controller may control the power converter to stop running, to reduce a probability that the capacitor undergoes self-healing. This can prevent a case in which the power converter is damaged due to the direct current bus short circuit fault caused because the capacitor further undergoes self-healing, and help extend a service life of the power converter.

With reference to the first aspect, in an embodiment, the controller is further configured to: when the total quantity of accumulated self-healing times is less than or equal to the first preset threshold, or when the total quantity of accumulated self-healing times is greater than the first preset threshold and less than the second preset threshold, control a dehumidification apparatus to run, where the dehumidification apparatus is configured to reduce humidity around the power converter.

In this way, when the dehumidification apparatus runs, the humidity around the power converter is reduced. The possibility that the capacitor undergoes self-healing is positively correlated with the humidity around the power converter. Therefore, when the humidity around the power converter is reduced, the possibility that the capacitor undergoes self-healing can be reduced. This can prevent a self-healing state of the capacitor from becoming more serious, and help improve performance of the capacitor.

With reference to the first aspect, in an embodiment, when the dehumidification apparatus runs, a frequency at which the controller controls, when the total quantity of accumulated self-healing times is greater than the first preset threshold and less than the second preset threshold, the dehumidification apparatus to run is greater than a frequency at which the controller controls, when the total quantity of accumulated self-healing times is less than or equal to the first preset threshold, the dehumidification apparatus to run.

When the total quantity of accumulated self-healing times of the capacitor is greater than the first preset threshold and less than the second preset threshold, that is, when the capacitor is in the moderate self-healing state, the health status of the capacitor is general, and the probability that the capacitor undergoes self-healing is relatively general; or when the total quantity of accumulated self-healing times of the capacitor is less than or equal to the first preset threshold, that is, when the capacitor is in the slight self-healing state, the health status of the capacitor is relatively good, and the probability that the capacitor undergoes self-healing is relatively low. Therefore, the probability that the capacitor undergoes self-healing when the capacitor is in the moderate self-healing state is greater than the probability that the capacitor undergoes self-healing when the capacitor is in a slight self-healing state. To prevent the capacitor from changing from the moderate self-healing state to the severe self-healing state, the controller may control, when the capacitor is in the moderate self-healing state, to increase a frequency at which the dehumidification apparatus runs, to further reduce the probability that the capacitor undergoes self-healing. This can reduce the possibility that the power converter is damaged due to propagation of the short circuit fault caused because the capacitor changes to the severe self-healing state.

With reference to the first aspect, in an embodiment, the controller is further configured to: when the total quantity of accumulated self-healing times is less than or equal to the first preset threshold, or when the total quantity of accumulated self-healing times is greater than the first preset threshold and less than the second preset threshold, control a smoke removal apparatus to run, where the smoke removal apparatus is configured to reduce smoke density around the power converter.

In this way, when the smoke removal apparatus runs, the smoke density around the power converter is reduced. The possibility that the capacitor undergoes self-healing is positively correlated with the smoke density around the power converter. Therefore, when the smoke density around the power converter is reduced, the possibility that the capacitor undergoes self-healing can be reduced. This can prevent a self-healing state of the capacitor from becoming more serious, and help improve performance of the capacitor.

With reference to the first aspect, in an embodiment, when the smoke removal apparatus runs, a frequency at which the controller controls, when the total quantity of accumulated self-healing times is greater than the first preset threshold and less than the second preset threshold, the smoke removal apparatus to run is greater than a frequency at which the controller controls, when the total quantity of accumulated self-healing times is less than or equal to the first preset threshold, the smoke removal apparatus to run.

When the total quantity of accumulated self-healing times of the capacitor is less than or equal to the first preset threshold, the health status of the capacitor is relatively good, that is, the capacitor is in the slight self-healing state, and the probability that the capacitor undergoes self-healing is relatively low; or when the total quantity of accumulated self-healing times of the capacitor is greater than the first preset threshold and less than the second preset threshold, that is, when the capacitor is in the moderate self-healing state, the health status of the capacitor is relatively general, and the probability that the capacitor undergoes self-healing is relatively high. Therefore, the probability that the capacitor undergoes self-healing when the capacitor is in the moderate self-healing state is greater than the probability that the capacitor undergoes self-healing when the capacitor is in the slight self-healing state. To prevent the capacitor from changing from the moderate self-healing state to the severe self-healing state, the controller may control, when the capacitor is in the moderate self-healing state, to increase a frequency at which the smoke removal apparatus runs, to further reduce the probability that the capacitor undergoes self-healing. This can reduce the possibility that the power converter is damaged due to the short circuit fault caused because the capacitor changes to the severe self-healing state.

With reference to the first aspect, in an embodiment, the controller is further configured to: when the total quantity of accumulated self-healing times is less than or equal to the first preset threshold, generate information indicating that the capacitor is in a slight self-healing state; or when the total quantity of accumulated self-healing times is greater than the first preset threshold and less than the second preset threshold, generate information indicating that the capacitor is in a moderate self-healing state; or when the total quantity of accumulated self-healing times is greater than or equal to the second preset threshold, generate information indicating that the capacitor is in a severe self-healing state.

In this way, operation and maintenance personnel can learn of the health status of the capacitor based on the information generated by the controller. When the controller should perform different actions in different cases but fails to perform the actions, the operation and maintenance personnel can perform corresponding control, to reduce the probability that the capacitor undergoes self-healing. This can reduce a possibility that the short circuit fault occurs and the possibility that the power converter is damaged due to propagation of the short circuit fault.

With reference to the first aspect, in an embodiment, the controller is further configured to: if a quantity of accumulated self-healing times that the capacitor undergoes self-healing within a period of time is greater than or equal to a third preset threshold, reduce the output power of the power converter, where the third preset threshold is less than or equal to the first preset threshold.

In this way, when the controller reduces the output power of the power converter, the heat released by the power converter during running can be reduced, and the temperature of the capacitor can be reduced. This can reduce a probability that the capacitor undergoes self-healing, improve performance of the capacitor, reduce a probability that the power converter is faulty, and prolong a service life of the power converter.

With reference to the first aspect, in an embodiment, the power conversion circuit includes a plurality of operating cycles; and when the capacitor meets a third preset condition once, the capacitor undergoes self-healing once, and the third preset condition includes: a largest value of a voltage change rate of the capacitor at adjacent time points in one of the operating cycles is greater than or equal to a preset voltage change rate threshold, and after falling in at least one of the operating cycles, a voltage of the capacitor restores to a voltage before falling; or a largest value of an absolute value of a difference between a voltage value sampled by the capacitor in a current operating cycle and an average value of voltage values sampled in a previous operating cycle is greater than or equal to a preset voltage threshold, and after falling in at least one of the operating cycles, a voltage of the capacitor restores to a voltage before falling.

In this embodiment of this application, the third preset condition is related to the change rate of the voltage value of the capacitor or the difference between the voltage value of the capacitor in the current operating cycle and a voltage value in an adjacent operating cycle of a switching transistor, and whether the voltage value of the capacitor can be restored after falling. The third preset condition can accurately reflect whether the capacitor undergoes self-healing. Therefore, the total quantity of accumulated self-healing times that is of the capacitor and that is determined based on the third preset condition is relatively accurate, to help the controller perform a corresponding action based on the total quantity of accumulated self-healing times and the preset threshold. This can avoid a short circuit fault that may be caused by an inaccurate total quantity of accumulated self-healing times of the capacitor, and avoid a case in which the power converter is damaged due to propagation of the short circuit fault.

According to a second aspect, a control method for a power converter is provided. The method includes: reducing output power of the power converter when a total quantity of accumulated self-healing times of a capacitor meets a first preset condition; or controlling, when a total quantity of accumulated self-healing times of a capacitor meets a second preset condition, the power converter to stop running.

With reference to the second aspect, in an embodiment, the first preset condition is specifically that the total quantity of accumulated self-healing times is greater than a first preset threshold and less than a second preset threshold.

With reference to the second aspect, in an embodiment, the second preset condition is specifically that the total quantity of accumulated self-healing times is greater than or equal to the second preset threshold.

With reference to the second aspect, in an embodiment, the method further includes: when the total quantity of accumulated self-healing times is less than or equal to the first preset threshold, generating information indicating that the capacitor is in a slight self-healing state; or when the total quantity of accumulated self-healing times is greater than the first preset threshold and less than the second preset threshold, generating information indicating that the capacitor is in a moderate self-healing state; or when the total quantity of accumulated self-healing times is greater than or equal to the second preset threshold, generating information indicating that the capacitor is in a severe self-healing state.

With reference to the second aspect, in an embodiment, the method further includes: if a quantity of accumulated self-healing times that the capacitor undergoes self-healing within a period of time is greater than or equal to a third preset threshold, reducing the output power of the power converter, where the third preset threshold is less than or equal to the first preset threshold.

For technical effect that may be achieved in the second aspect, refer to descriptions of technical effect that may be achieved in any possible implementation of the first aspect. Details are not described herein again.

### BRIEF DESCRIPTION OF DRAWINGS

FIG. 1 is a diagram of a possible scenario to which this application is applicable;
FIG. 2 is a diagram of a power converter according to an embodiment of this application;
FIG. 3 is a diagram of another power converter according to an embodiment of this application;
FIG. 4 is a diagram of a capacitor in different self-healing states according to an embodiment of this application;
FIG. 5 is a diagram of another power converter according to an embodiment of this application;
FIG. 6 is a diagram of another power converter according to an embodiment of this application;
FIG. 7 is a diagram of a control time sequence of switching transistors of a power converter according to an embodiment of this application; and
FIG. 8 is a diagram of a control method for a power converter according to an embodiment of this application.

### DESCRIPTION OF EMBODIMENTS

For ease of understanding solutions of this application, the following first describes terms that may be used.

Self-healing: A capacitor has a self-healing feature. The self-healing feature of the capacitor is a feature that the capacitor can recover insulation performance when the capacitor has a defect or breakdown. The capacitor may be classified into three states of a slight self-healing state, a moderate self-healing state, and a severe self-healing state based on a quantity of times that the capacitor undergoes self-healing. In addition, quantities of self-healing times corresponding to the three states sequentially increase.

For ease of understanding of embodiments of this application, the following descriptions are first provided before embodiments of this application are described.

In descriptions of embodiments of this application, "electrical connection" may be understood as a manner of direct electrical connection or indirect electrical connection between two electrical elements to implement signal transmission. For example, that A is electrically connected to B may be understood as that A is directly electrically connected to B, or may be understood as that A is indirectly electrically connected to B via one or more other electrical elements.

In the descriptions of embodiments of this application, unless otherwise specified, "and/or" describes only an association relationship between associated objects and indicates that three relationships may exist. For example, A and/or B may indicate the following three cases: Only A exists, both A and B exist, and only B exists.

The terms "first" and "second" in embodiments of this application are merely intended for a purpose of description, and shall not be understood as an indication or implication of relative importance or implicit indication of a quantity of indicated technical features. Therefore, a feature limited by "first " or "second" may explicitly indicate or implicitly include one or more such features. In addition, in the descriptions of embodiments of this application, "a plurality of" means two or more, and "at least one" and "one or more" mean one, two, or more.

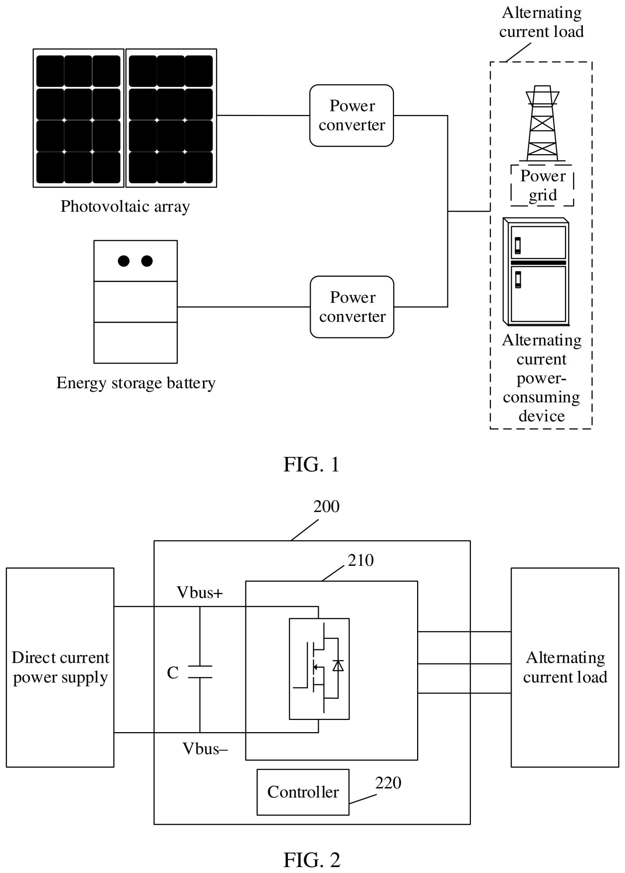

FIG. 1 is a diagram of a possible scenario to which this application is applicable. Refer to FIG. 1. A system shown in FIG. 1 may include a direct current power supply and a power converter. The direct current power supply may include a photovoltaic array, an output end of the photovoltaic array may be connected to a first end of the power converter, and a second end of the power converter is connected to an alternating current load. In the system shown in FIG. 1, the photovoltaic array may be obtained by connecting one or more photovoltaic components in series or in parallel. The power converter may invert a direct current provided by the photovoltaic array, and output an alternating current obtained through the inversion to the alternating current load. The alternating current load may be an alternating current grid or an alternating current power-consuming device. Herein, when the power converter is connected to a grid, the alternating current load may be the alternating current grid; or when the power converter is disconnected from a grid, the alternating current load may be the alternating current power-consuming device.

In some feasible implementations, still with reference to FIG. 1, the direct current power supply may further include an energy storage battery. An output end of the energy storage battery may be connected to a first end of a power converter, and a second end of the power converter is connected to the alternating current load. The power converter may invert a direct current provided by the energy storage battery, and output an alternating current obtained through the inversion to the alternating current load for power supply.

In the application scenario shown in FIG. 1, the power converter may run in a wide range of harsh scenarios with a high temperature, high humidity, and high smoke. When the power converter runs in the harsh scenarios for a long time, a capacitor of the power converter may easily undergo self-healing, resulting in capacitance degradation and mechanical damage of the capacitor, and affecting performance of the capacitor.

Currently, when the capacitor undergoes self-healing, the power converter is temporarily shut down through over current protection on a direct current side or bus undervoltage protection on a direct current side. The power converter is reconnected to the grid after the over current protection or undervoltage protection is eliminated. However, the power converter can be only temporarily shut down through the over current protection and undervoltage protection. The capacitor may still undergo self-healing after the power converter is reconnected to the grid, and long-term accumulation still results in capacitance degradation and mechanical damage of the capacitor Particularly, when the capacitor is in a severe self-healing state, a direct current bus short circuit may be triggered, resulting in propagation of a short circuit fault and damage of the power converter.

Based on this, as shown in FIG. 2, this application provides a power converter 200. The power converter 200 includes a capacitor C, a power conversion circuit 210, and a controller 220. The power conversion circuit 210 includes a positive direct current bus Vbus+ and a negative direct current bus Vbus-, and the capacitor C is connected between the positive direct current bus Vbus+ and the negative direct current bus Vbus-. The power conversion circuit 210 may be configured to invert a direct current from a direct current power supply into a three-phase alternating current.

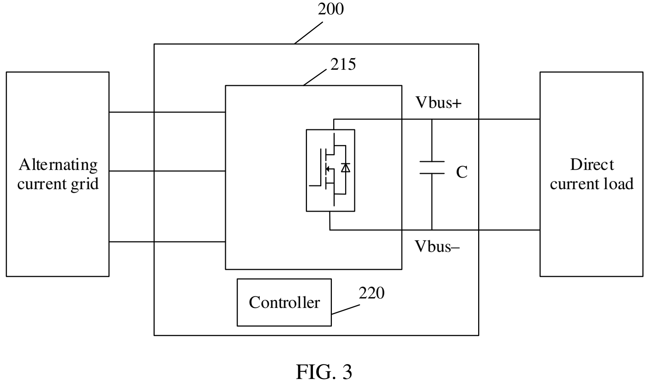

As shown in FIG. 3, this application further provides a power converter 200. The power converter 200 includes a capacitor C, a power conversion circuit 215, and a controller 220. The power conversion circuit 215 includes a positive direct current bus Vbus+ and a negative direct current bus Vbus-, and the capacitor C is connected between the positive direct current bus Vbus+ and the negative direct current bus Vbus-. The power conversion circuit 215 may be configured to rectify an alternating current from an alternating current grid into a direct current. It should be understood that FIG. 2 and FIG. 3 are merely examples for description. The power converter in embodiments of this application may be another component, for example, a chopper. This is not limited.

The following uses FIG. 2 as an example for description.

In this embodiment of this application, the controller 220 is configured to reduce output power of the power converter 200 when a total quantity of accumulated self-healing times of the capacitor C meets a first preset condition; or the controller 220 is configured to control, when a total quantity of accumulated self-healing times of the capacitor C meets a second preset condition, the power converter 200 to stop running.

In this embodiment of this application, the total quantity of accumulated self-healing times that the capacitor C undergoes self-healing is a quantity of times that the capacitor C undergoes self-healing in accumulation from a moment at which the power converter 200 starts to run to a current moment. In this process, when the power converter 200 stops running and then runs again, the quantity of times that the capacitor C undergoes self-healing in accumulation is calculated from a quantity of self-healing times before the power converter stops running. For example, the power converter stops running at a moment t0, and a quantity of times that the capacitor C of the power converter undergoes self-healing in accumulation before the moment t0 is m. When the power converter starts running again at a moment t1, if the capacitor C undergoes self-healing once again, a quantity of times that the capacitor C undergoes self-healing in accumulation is m+1.

As the power converter 200 keeps running, a total quantity of accumulated self-healing times that the capacitor C undergoes self-healing may gradually increase. The controller 220 may reduce the output power of the power converter 200 when the total quantity of accumulated self-healing times meets the first preset condition, or control, when the total quantity of accumulated self-healing times meets the second preset condition, the power converter 200 to stop running.

When the controller 220 reduces the output power of the power converter 200, that is, when a voltage or current output by the power converter 200 is reduced, heat generated by the power converter 200 is reduced. A possibility that the capacitor C undergoes self-healing is positively correlated with a temperature of the power converter 200. Therefore, when the output power of the power converter 200 is reduced, the possibility that the capacitor C undergoes self-healing can be reduced, and a rate of capacitance degradation and mechanical damage of the capacitor C can be reduced. In addition, because the probability that the capacitor C undergoes self-healing is reduced, a possibility that the capacitor C is in a severe self-healing state is reduced, and a possibility of triggering a direct current bus short circuit fault is reduced. This can reduce a possibility that the power converter is damaged due to propagation of the short circuit fault.

When the controller 220 controls the power converter 200 to stop running, because the power converter 200 is in a non-running state or a non-operating state, the power converter 200 does not generate heat. Therefore, a possibility that the capacitor C of the power converter 200 further undergoes self-healing is reduced. Compared with a solution in which transient protection is performed through over current protection or undervoltage protection but the capacitor may still undergo self-healing after the power converter is reconnected to a grid, this application is equivalent to cutting off heat generation from a source. In this way, a possibility that the capacitor C of the power converter 200 undergoes self-healing can be reduced, and a possibility of triggering a direct current bus short circuit fault is reduced. This can reduce a possibility that the power converter is damaged due to propagation of the short circuit fault.

The following provides specific descriptions with reference to the first preset condition or the second preset condition.

In an embodiment, the first preset condition is specifically that the total quantity of accumulated self-healing times is greater than a first preset threshold and less than a second preset threshold.

The first preset threshold and the second preset threshold in this embodiment of this application are relative values, as long as that the first preset threshold is less than the second preset threshold is met, and specific values of the first preset threshold and the second preset threshold are not particularly limited.

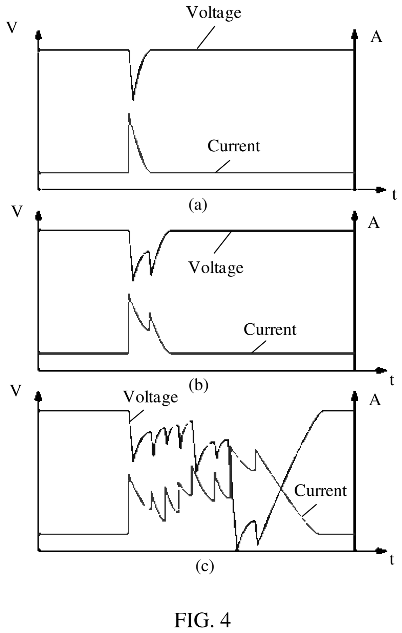

For example, the first preset threshold is x1, and the second preset threshold is x2. When the total quantity of accumulated self-healing times is y, and y≤x1, it indicates that the quantity of times that the capacitor C undergoes self-healing is relatively small until now, as shown in (a) in FIG. 4, and it may be considered that the capacitor C is in a slight self-healing state in this time. When x1≤y≤x2, it indicates that the quantity of times that the capacitor C undergoes self-healing is relatively large until now, as shown in (b) in FIG. 4, and it may be considered that the capacitor C is in a moderate self-healing state in this time.

When the capacitor C is in the slight self-healing state, the controller 220 may temporarily not control the output power of the power converter 200 to change. A reason is as follows: Because the capacitor C is in the slight self-healing state, it indicates that the capacitor C has a relatively small capacitance degradation degree in this time, and the capacitor C has a relatively good health state. A power consumption requirement of the alternating current load needs to be considered more than the health status of the capacitor C. Because the quantity of times that the capacitor C undergoes self-healing is relatively small, the capacitor C has the relatively good health state. Even if an alternating current with original power is output, the capacitor C may undergo self-healing, but a possibility of the direct current bus short circuit fault is relatively small. Therefore, in this case, output power of the power converter 200 is mainly subject to the power requirement of the alternating current load, and the controller 220 may control the power converter 200 to continue to output the alternating current with the original power.

When the capacitor C is in the moderate self-healing state, the controller 220 may reduce the output power of the power converter 200. A reason is as follows: Because the capacitor C is in the moderate self-healing state in this time, it indicates that the capacitor C has a relatively large capacitance degradation degree in this time, and the capacitor C has a relatively general health state. The health status of the capacitor C needs be considered more than a power consumption requirement of the alternating current load. In other words, because the quantity of times that the capacitor C undergoes self-healing is relatively large, the health status of the capacitor C is relatively general. If the power converter 200 is controlled to continue to output an alternating current with original power, the health status of the capacitor C is more likely to deteriorate. Consequently, the capacitor C changes to a severe self-healing state, and the direct current bus short circuit fault may be triggered. Therefore, in this case, the controller 220 may reduce the output power of the power converter 200, to reduce a probability that the capacitor C undergoes self-healing. Therefore, the capacitor C can be prevented from changing to the severe self-healing state.

In an embodiment, the second preset condition is specifically that the total quantity of accumulated self-healing times is greater than or equal to the second preset threshold.

In this embodiment of this application, that the second preset threshold is x2 is still used as an example. When the total quantity of accumulated self-healing times is y, and y≥x2, it indicates that the quantity of times that the capacitor C undergoes self-healing is large until now, as shown in (c) in FIG. 4, and it may be considered that the capacitor C is in a severe self-healing state in this time. When the capacitor C is in the severe self-healing state, the controller 220 may control the power converter 200 to stop running. A reason is as follows: Because the capacitor C is in the severe self-healing state in this time, it indicates that the capacitor C has a very large capacitance degradation degree in this time, and the capacitor C has a very poor health state. If the controller 220 controls the power converter 200 to continue running, the capacitor C is more likely to undergo self-healing again. On this basis, it is more likely to trigger the direct current bus short circuit, resulting in propagation of the short circuit fault and damage of the power converter. Therefore, when the total quantity of accumulated self-healing times of the capacitor C is greater than or equal to the second preset threshold, the controller 220 may control the power converter 200 to stop running, to reduce a probability that the capacitor C undergoes self-healing. This can prevent a case in which the power converter is damaged due to the direct current bus short circuit fault caused because the capacitor C further undergoes self-healing, and help extend a service life of the power converter.

Generally, the power conversion circuit 210 includes a plurality of switching transistors, and the controller 220 can control the plurality of switching transistors to be on or off, to implement running or non-running of the power converter 200. In an actual scenario, when the total quantity of accumulated self-healing times is greater than or equal to the second preset threshold, the controller 220 may control the plurality of switching transistors to be off, to stop running of the power converter 200.

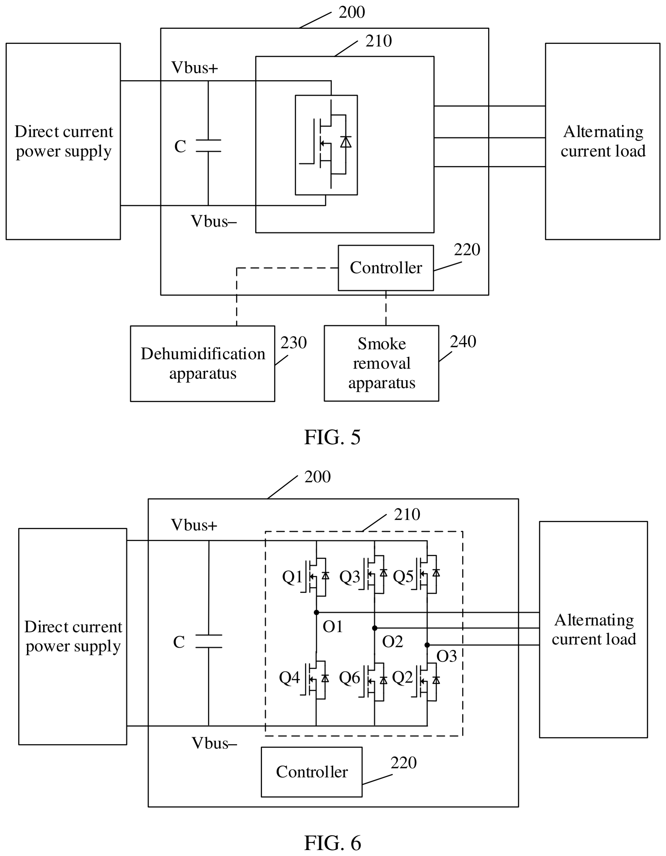

As mentioned above, when the total quantity of accumulated self-healing times is greater than the first preset threshold and less than the second preset threshold, the controller 220 controls to reduce the output power of the power converter 200. However, when the total quantity of accumulated self-healing times is less than or equal to the first preset threshold, the output power of the power converter 200 is not changed, considering the power consumption requirement of the alternating current load. However, if the power converter 200 continues to output the alternating current with the original power, the possibility that the capacitor C undergoes self-healing is relatively high. Therefore, in an embodiment, as shown in FIG. 5, a dehumidification apparatus 230 may be disposed around the power converter 200, and the dehumidification apparatus 230 is configured to reduce humidity around the power converter 200. The controller 220 may control a status of the dehumidification apparatus 230.

An operating principle of the dehumidification apparatus 230 is as follows: Humid air is drawn into the dehumidification apparatus 230 via a fan, and passes through a heat exchanger. In this case, water molecules in air are condensed into water droplets, and processed dry air is discharged out of the power converter 200. In this way, humidity in the power converter 200 is kept at appropriate relative humidity. For example, the dehumidification apparatus 230 may be a dehumidifier, a dryer, or a moisture absorber.

In this embodiment of this application, the controller 220 is further configured to control, when the total quantity of accumulated self-healing times is less than or equal to the first preset threshold, the dehumidification apparatus 230 to run. When the dehumidification apparatus 230 runs, the humidity around the power converter 200 is reduced. The possibility that the capacitor C undergoes self-healing is positively correlated with the humidity around the power converter 200. Therefore, when the humidity around the power converter 200 is reduced, the possibility that the capacitor C undergoes self-healing can be reduced. This can prevent the capacitor C from changing from the slight self-healing state to the moderate self-healing state, and help improve performance of the capacitor C.

In addition, when the total quantity of accumulated self-healing times is greater than the first preset threshold and less than the second preset threshold, the controller may also control the dehumidification apparatus 230 to run, in addition to reducing the output power of the power converter 200. In this way, the humidity around the power converter 200 is reduced, so that the probability that the capacitor C undergoes self-healing can be further reduced. This can prevent the capacitor C from changing from the moderate self-healing state to the severe self-healing state, and help improve performance of the capacitor C.

In conclusion, when the total quantity of accumulated self-healing times of the capacitor C is less than or equal to the first preset threshold, or when the total quantity of accumulated self-healing times of the capacitor C is greater than the first preset threshold and less than the second preset threshold, the controller 220 may control the dehumidification apparatus 230 to run, to reduce the probability that the capacitor C undergoes self-healing. In different cases, the controller 220 controls the dehumidification apparatus 230 to run at different frequencies. In an embodiment, when the dehumidification apparatus 230 runs, a frequency at which the controller 220 controls, when the total quantity of accumulated self-healing times is greater than the first preset threshold and less than the second preset threshold, the dehumidification apparatus 230 to run is greater than a frequency at which the controller 220 controls, when the total quantity of accumulated self-healing times is less than or equal to the first preset threshold, the dehumidification apparatus 230 to run.

In this embodiment of this application, when the total quantity of accumulated self-healing times of the capacitor C is greater than the first preset threshold and less than the second preset threshold, that is, when the capacitor C is in the moderate self-healing state, the controller 220 controls the dehumidification apparatus 230 to run at a frequency f1; or when the total quantity of accumulated self-healing times of the capacitor C is less than or equal to the first preset threshold, that is, when the capacitor C is in the slight self-healing state, the controller 220 controls the dehumidification apparatus 230 to run at a frequency f2, where f1>f2. A reason is as follows: When the capacitor C is in the slight self-healing state, the health status of the capacitor C is relatively good, and the probability that the capacitor C undergoes self-healing is relatively low. When the capacitor C is in the moderate self-healing state, the health status of the capacitor C is relatively general, and the probability that the capacitor C undergoes self-healing is relatively high. Even if the controller 220 controls to reduce the output power of the power converter 200, the output power of the power converter 200 is not greatly reduced in a general case, considering the power consumption requirement of the alternating current load. Therefore, the capacitor C may still undergo self-healing, and in most scenarios, when the power of the power converter 200 is reduced, the probability that the capacitor C undergoes self-healing when the capacitor C is in the moderate self-healing state is still greater than the probability that the capacitor C undergoes self-healing when the capacitor C is in the slight self-healing state. To prevent the capacitor C from changing from the moderate self-healing state to the severe self-healing state, the controller 220 may control increase of a frequency at which the dehumidification apparatus 230 runs, to further reduce the probability that the capacitor C undergoes self-healing when the capacitor C is in the moderate self-healing state. This can reduce the possibility that the power converter is damaged due to propagation of the short circuit fault caused because the capacitor C changes to the severe self-healing state.

In addition, in some examples, when the capacitor C is in different states, the controller 220 may also control the dehumidification apparatus 230 to have different air vent sizes. For example, when the capacitor C is in the moderate self-healing state, the controller 220 controls the dehumidification apparatus 230 to have a relatively large air vent size, and a relatively large amount of humid air may be processed each time and discharged out of the power converter 200. When the capacitor C is in the slight self-healing state, the controller 220 controls the dehumidification apparatus 230 to have a relatively small air vent size, and a relatively small amount of humid air may be processed each time and discharged out of the power converter 200. A specific reason is similar to the foregoing descriptions, and is not described again.

Still refer to FIG. 5. In an embodiment, a smoke removal apparatus 240 may be disposed around the power converter 200, and the smoke removal apparatus 240 is configured to reduce smoke density around the power converter 200. The controller 220 may control a status of the smoke removal apparatus 240.

An operating principle of the smoke removal apparatus 240 is as follows: Particulate matters from air in the power converter 200 are removed in a manner like filtering, adsorption, and decomposition, to purify the air in the power converter 200. The smoke removal apparatus 240 may be, for example, a smoke purifier.

In this embodiment of this application, the controller 220 is further configured to: when the total quantity of accumulated self-healing times is less than or equal to the first preset threshold, control the smoke removal apparatus 240 to run. When the smoke removal apparatus 240 runs, the smoke density around the power converter 200 is reduced. A possibility that the capacitor C undergoes self-healing is positively correlated with the smoke density around the power converter. Therefore, when the smoke density around the power converter 200 is reduced, the probability that the capacitor C undergoes self-healing can be reduced. This can prevent the capacitor C from changing from the slight self-healing state to the moderate self-healing state, and help improve performance of the capacitor C.

In addition, when the total quantity of accumulated self-healing times is greater than the first preset threshold and less than the second preset threshold, in addition to reducing the output power of the power converter 200, the controller may also control the smoke removal apparatus 240 to run. In this way, the smoke degree of the power converter 200 is reduced, so that the probability that the capacitor C undergoes self-healing can be further reduced. This can prevent the capacitor C from changing from the moderate self-healing state to the severe self-healing state, and help improve performance of the capacitor C.

In an embodiment, when the smoke removal apparatus 240 runs, a frequency at which the controller controls, when the total quantity of accumulated self-healing times is greater than the first preset threshold and less than the second preset threshold, the smoke removal apparatus 240 to run is greater than a frequency at which the controller controls, when the total quantity of accumulated self-healing times is less than or equal to the first preset threshold, the smoke removal apparatus 240 to run. A specific reason is similar to that of the dehumidification apparatus 230, and is not described again.

It should be understood that when the power converter 200 includes the dehumidification apparatus 230 and the smoke removal apparatus 240, when the total quantity of accumulated self-healing times of the capacitor C is less than the second preset threshold, the controller 220 may determine whether the humidity or smoke density around the power converter 200 is appropriate, and then control, based on a determining result, a corresponding apparatus to run. For example, when determining that the humidity around the power converter 200 is inappropriate but the smoke density around is appropriate, the controller 220 controls the dehumidification apparatus 230 to run; or when determining that the humidity around the power converter 200 is appropriate but the smoke density around is inappropriate, the controller 220 controls the smoke removal apparatus 240 to run; or when determining that neither the humidity around nor the smoke density around the power converter 200 is appropriate, the controller 220 controls both the dehumidification apparatus 230 and the smoke removal apparatus 240 to run.

In an embodiment, the controller 220 is further configured to: when the total quantity of accumulated self-healing times is less than or equal to the first preset threshold, generate information indicating that the capacitor C is in a slight self-healing state; or when the total quantity of accumulated self-healing times is greater than the first preset threshold and less than the second preset threshold, generate information indicating that the capacitor C is in a moderate self-healing state; or when the total quantity of accumulated self-healing times is greater than or equal to the second preset threshold, generate information indicating that the capacitor C is in a severe self-healing state. In this way, operation and maintenance personnel can learn of the health status of the capacitor C based on the information. When the controller 220 should perform different actions in different cases but fails to perform the actions, the operation and maintenance personnel can perform corresponding control, to reduce the probability that the capacitor C undergoes self-healing.

For example, the first preset threshold is still x1, and the second preset threshold is still x2. When the total quantity of accumulated self-healing times is y, and x1<y<x2, it may be considered that the capacitor C is in the moderate self-healing state. According to the foregoing content, in this case, the controller 220 may control the dehumidification apparatus 230 or the smoke removal apparatus 240 to run, and/or reduce the output power of the power converter 200. If the dehumidification apparatus 230 does not run because connection between the controller 220 and the dehumidification apparatus 230 is temporarily faulty, when the controller 220 generates the information indicating that the capacitor C is in the moderate self-healing state, the operation and maintenance personnel determine that the dehumidification apparatus 230 does not run, and the operation and maintenance personnel control the dehumidification apparatus 230 to run, to reduce the probability that the capacitor C undergoes self-healing. This can prevent the capacitor C from going to the severe self-healing state from the moderate self-healing state, reduce a possibility that the capacitor C is in the severe self-healing state, reduce a possibility of triggering the direct current bus short circuit fault, and reduce a possibility that the short circuit fault occurs and a possibility that the power converter is damaged due to propagation of the short circuit fault.

For another example, when the total quantity of accumulated self-healing times is y, and y≤x2, it may be considered that the capacitor C is in the severe self-healing state. According to the foregoing content, in this case, the controller 220 may control the power converter 200 to stop running. If the power converter 200 does not stop running because a fault temporarily occurs between the controller 220 and the switching transistor of the power conversion circuit 210, when the controller 220 generates the information indicating that the capacitor C is in the severe self-healing state, the operation and maintenance personnel may control the power converter 200 to stop running, to avoid triggering the direct current bus short circuit fault. This can avoid a possibility that the short circuit fault occurs and a possibility that the power converter is damaged due to propagation of the short circuit fault.

In this embodiment of this application, information, generated by the controller 220, indicating that the capacitor C is in different states is not limited. For example, the information may be speech information or indicator blinking information.

When the information is the indicator blinking information, blinking of indicators of different colors indicates that the capacitor C is in different states. For example, when a green indicator blinks, it may indicate that the capacitor C is in the slight self-healing state; or when a yellow indicator blinks, it may indicate that the capacitor C is in the moderate self-healing state; or when a red indicator blinks, it may indicate that the capacitor C is in the severe self-healing state. Alternatively, when the information is the indicator blinking information, blinking frequencies of a same indicator indicate that the capacitor C is in different states. For example, when a blinking frequency of the indicator is relatively low, it may indicate that the capacitor C is in the slight self-healing state; or when a blinking frequency of the indicator is relatively high, it may indicate that the capacitor C is in the moderate self-healing state; or when the blinking frequency of the indicator is very high, it may indicate that the capacitor C is in the severe self-healing state.

In an embodiment, the controller 220 is further configured to: if a quantity of accumulated self-healing times that the capacitor C undergoes self-healing within a period of time is greater than or equal to a third preset threshold, reduce the output power of the power converter, where the third preset threshold is less than or equal to the first preset threshold.

The period of time in this embodiment of this application may be one week, one month, one quarter, half a year, or the like. When the period of time is different, the third preset threshold may be different. For example, if the period of time is one week, the third preset threshold may be set to, for example, 2; or if the period of time is one month, the third preset threshold may be set to, for example, 5; if the period of time is one quarter, the third preset threshold may be set to, for example, 10; or the like.

In this embodiment of this application, for example, the period of time is one month. It is assumed that the third preset threshold is x3, and the quantity of accumulated times that the capacitor C undergoes self-healing in this month is y0. If y0≥x3, the quantity of times that the capacitor C undergoes self-healing in this month is relatively large, and it indicates that an ambient temperature at which the power converter 200 is located may be relatively high, or the power converter 200 releases a relatively large amount of heat during running. In conclusion, a current temperature of the power converter 200 is relatively high. If the power converter 200 continues to output an alternating current of original power, the power converter 200 releases a relatively large amount of heat during running, resulting in a higher temperature of the capacitor C. This reduces performance of the capacitor C, and increases a probability that the power converter 200 is faulty. Therefore, when y0≥x3, the controller 220 may reduce the output power of the power converter, to reduce the heat released by the power converter 200 during running, and reduce the temperature of the capacitor C. This can reduce a probability that the capacitor C undergoes self-healing, improve performance of the capacitor C, reduce a probability that the power converter 200 is faulty, and prolong a service life of the power converter 200.

In this embodiment of this application, the power conversion circuit includes a plurality of operating cycles, and the operating cycle of the power conversion circuit may be understood as an operating cycle of a switching transistor described below. As shown in FIG. 6, the power conversion circuit 210 includes six switching transistors, and the six switching transistors are respectively Q1, Q2, Q3, Q4, Q5 and Q6. The switching transistor Q1 and the switching transistor Q4 are one bridge arm, the switching transistor Q3 and the switching transistor Q6 are one bridge arm, and the switching transistor Q5 and the switching transistor Q2 are one bridge arm.

A basic operating mode of the power conversion circuit 210 shown in FIG. 6 is a 180° conduction manner. To be specific, a conduction angle of each bridge arm is 180°, two switching transistors of a same phase (a same bridge arm) are alternately on, and a difference between angles at which the phases start to be conducted is 120°. In this way, at any moment, three switching transistors are on at the same time.

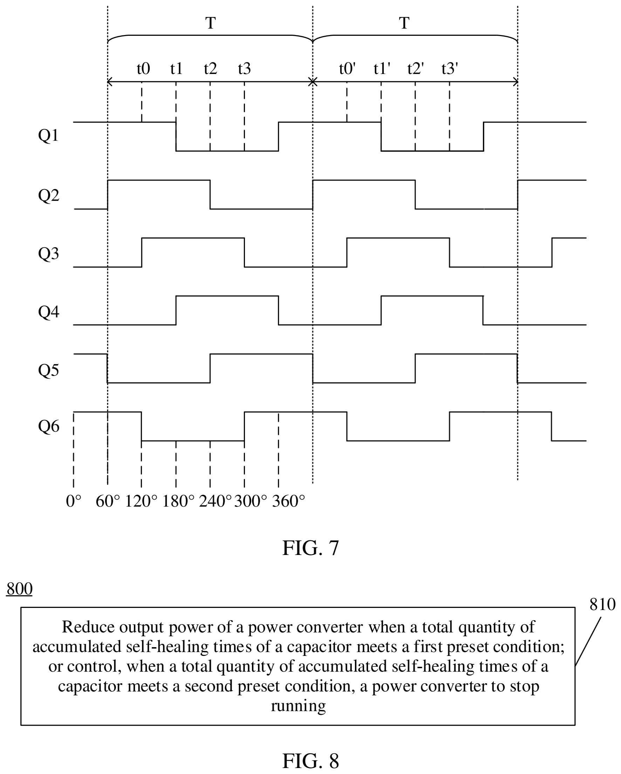

For example, as shown in FIG. 7, for a cycle from 0° to 60°, gates of the switching transistors Q1, Q5, and Q6 input a high level, and the switching transistors Q1, Q5, and Q6 are on. In a cycle from 60° to 120°, gates of the switching transistors Q1, Q2, and Q6 input a high level, and the switching transistors Q1, Q2, and Q6 are on. In a cycle from 120° to 180°, gates of the switching transistors Q1, Q2, and Q3 input a high level, and the switching transistors Q1, Q2, and Q3 are on. In a cycle from 180° to 240°, gates of the switching transistors Q2, Q4, and Q6 input a high level, and the switching transistors Q2, Q4, and Q6 are on. In a cycle from 240° to 300°, gates of the switching transistors Q3, Q4, and Q5 input a high level, and the switching transistors Q3, Q4, and Q5 are on. In a cycle from 300° to 360°, gates of the switching transistors Q4, Q5, and Q6 input a high level, and the switching transistors Q4, Q5, and Q6 are on.

The operating cycle in this embodiment of this application is T shown in FIG. 7. For example, only two operating cycles are shown in the figure. For ease of understanding, FIG. 7 shows an example of a start moment and an end moment of an operating cycle of a switching transistor. It should be understood that the start moment and the end moment of the operating cycle of the switching transistor shown in the figure are merely examples, and should not constitute a special limitation on this application.

In this embodiment of this application, when the capacitor C meets a third preset condition once, the capacitor C undergoes self-healing once. The third preset condition includes: A largest value of a voltage change rate of the capacitor C at adjacent time points in one of the operating cycles is greater than or equal to a preset voltage change rate threshold R0, and after falling in at least one of the operating cycles, a voltage of the capacitor C restores to a voltage before falling; or a largest value of an absolute value of a difference between a voltage value sampled by the capacitor C in a current operating cycle and an average value of voltage values sampled in a previous operating cycle is greater than or equal to a preset voltage threshold V0, and after falling in at least one of the operating cycles, a voltage of the capacitor C restores to a voltage before falling.

In this embodiment of this application, it is assumed that an operating frequency of a switching transistor is f1, a frequency at which the controller 220 controls sampling on the capacitor C is f2, f2=N×f1, and N is an integer greater than or equal to 2. In this case, the controller 220 may control sampling to be performed N times in one switching cycle T, and time intervals between adjacent sampling points in one switching cycle are equal. With reference to FIG. 7, the following describes in detail a case in which the capacitor C undergoes self-healing or does not undergo self-healing.

Refer to FIG. 7. For example, N=4. The controller 220 may control sampling to be performed four times in one switching cycle. For example, the controller 220 controls sampling to be separately performed at moments t0, t1, t2, and t3, and four sampled voltage values of the capacitor C are sequentially V1, V2, V3, and V4. Then, voltage change rates at adjacent moments are calculated, that is, (V2-V1)/(t1-t0)=R1, (V3-V2)/(t2-t1)=R2, and (V4-V3)/(t3-t2)=R3 are calculated. If a largest value of the three voltage change rates is R1, when R1≥R0, and after falling in one or more switching cycles T, a voltage of the capacitor C restores to a voltage before falling, for example, when the voltage of the capacitor C starts to fall at the moment t0, and then is restored to V1 again at the moment t3, it may be considered that the capacitor C meets the third preset condition, and the controller 220 records that the capacitor C undergoes self-healing once; or when R1<R0, or after falling in one or more switching cycles T, a voltage of the capacitor C does not restore to a voltage before falling, the controller 220 does not record that the capacitor C undergoes self-healing once.

Alternatively, the controller 220 performs sampling at moments t0', t1', t2', and t3', and four sampled voltage values of the capacitor C are sequentially V1', V2', V3', and V4'. An average value of the voltage values of the capacitor C sampled in the previous operating cycle is (V1+V2+V3+v4)/4=Va, and V1'-Va, V2'-Va, V3'-Va, and V4'-Va are calculated separately. If a largest value of absolute values of the four differences is V1'-Va, when the absolute value of V1'-Va is greater than or equal to V0, and after falling in one or more switching cycles T, a voltage of the capacitor C restores to a voltage before falling, for example, when the voltage of the capacitor C starts to fall at a moment t0', and then is restored to V1' again at the moment t3', it may be considered that the capacitor C meets the third preset condition, and the controller 220 records that the capacitor C undergoes self-healing once; or when the absolute value of V1'-Va is less than V0, or after falling in one or more switching cycles T, a voltage of the capacitor C does not restore to a voltage before falling, the controller 220 does not record that the capacitor C undergoes self-healing once.

Therefore, the controller 220 records or does not record, by determining whether the capacitor C meets the third preset condition, that the capacitor C undergoes self-healing once, the third preset condition is related to the change rate of the voltage value of the capacitor C or the difference between the voltage value of the capacitor C in the current operating cycle and a voltage value in an adjacent operating cycle of the switching transistor, and whether the voltage value of the capacitor C can be restored after falling. The preset condition can accurately reflect whether the capacitor C undergoes self-healing. Therefore, the total quantity of accumulated self-healing times that is of the capacitor C and that is recorded by the controller 220 based on the preset condition is relatively accurate, to help the controller 220 perform a corresponding action based on the total quantity of accumulated self-healing times and the preset threshold. This can avoid a short circuit fault that may be caused by an inaccurate total quantity of accumulated self-healing times of the capacitor C, and avoid a case in which the power converter is damaged due to propagation of the short circuit fault.

It should be noted that a specific circuit topology of the power conversion circuit 210 shown in the foregoing embodiment is merely an example, and the circuit topology of the power conversion circuit 210 may alternatively be another circuit topology. The circuit topology of the power conversion circuit 210 is not specifically limited in this application.

It should be further noted that the values shown in the foregoing embodiments are merely examples for description, and may be changed to other values in an actual scenario. Therefore, the values shown in the foregoing examples should not constitute a special limitation on this application.

In addition, as shown in FIG. 8, this application further provides a control method 800 for a power converter. The method 800 may include step 810.

Step 810: Reduce output power of the power converter when a total quantity of accumulated self-healing times of a capacitor meets a first preset condition; or control, when a total quantity of accumulated self-healing times of a capacitor meets a second preset condition, the power converter to stop running.

In an embodiment, the first preset condition is specifically that the total quantity of accumulated self-healing times is greater than a first preset threshold and less than a second preset threshold.

In an embodiment, the second preset condition is specifically that the total quantity of accumulated self-healing times is greater than or equal to the second preset threshold.

In an embodiment, the method 800 further includes: when the total quantity of accumulated self-healing times is less than or equal to the first preset threshold, generating information indicating that the capacitor is in a slight self-healing state; or when the total quantity of accumulated self-healing times is greater than the first preset threshold and less than the second preset threshold, generating information indicating that the capacitor is in a moderate self-healing state; or when the total quantity of accumulated self-healing times is greater than or equal to the second preset threshold, generating information indicating that the capacitor is in a severe self-healing state.

In an embodiment, the method 800 further includes: if a quantity of accumulated self-healing times that the capacitor undergoes self-healing within a period of time is greater than or equal to a third preset threshold, reducing the output power of the power converter, where the third preset threshold is less than or equal to the first preset threshold.

The power converter in this embodiment of this application is the power converter 200 in the foregoing embodiment. For content of the method 800, refer to related content in FIG. 2 to FIG. 7. Details are not described herein again.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A power converter, wherein the power converter comprises a capacitor, a power conversion circuit, and a controller, the power conversion circuit comprises a positive direct current bus and a negative direct current bus, and the capacitor is connected between the positive direct current bus and the negative direct current bus; and
the controller is configured to reduce output power of the power converter when a total quantity of accumulated self-healing times of the capacitor meets a first preset condition; or
the controller is configured to control, when a total quantity of accumulated self-healing times of the capacitor meets a second preset condition, the power converter to stop running.

2. The power converter according to claim 1, wherein
the first preset condition is specifically that the total quantity of accumulated self-healing times is greater than a first preset threshold and less than a second preset threshold.

3. The power converter according to claim 2, wherein
the second preset condition is specifically that the total quantity of accumulated self-healing times is greater than or equal to the second preset threshold.

4. The power converter according to claim 2 or 3, wherein the controller is further configured to:
when the total quantity of accumulated self-healing times is less than or equal to the first preset threshold, or when the total quantity of accumulated self-healing times is greater than the first preset threshold and less than the second preset threshold, control a dehumidification apparatus to run, wherein the dehumidification apparatus is configured to reduce humidity around the power converter.

5. The power converter according to claim 4, wherein
when the dehumidification apparatus runs, a frequency at which the controller controls, when the total quantity of accumulated self-healing times is greater than the first preset threshold and less than the second preset threshold, the dehumidification apparatus to run is greater than a frequency at which the controller controls, when the total quantity of accumulated self-healing times is less than or equal to the first preset threshold, the dehumidification apparatus to run.

6. The power converter according to any one of claims 2 to 5, wherein the controller is further configured to:
when the total quantity of accumulated self-healing times is less than or equal to the first preset threshold, or when the total quantity of accumulated self-healing times is greater than the first preset threshold and less than the second preset threshold, control a smoke removal apparatus to run, wherein the smoke removal apparatus is configured to reduce smoke density around the power converter.

7. The power converter according to claim 6, wherein
when the smoke removal apparatus runs, a frequency at which the controller controls, when the total quantity of accumulated self-healing times is greater than the first preset threshold and less than the second preset threshold, the smoke removal apparatus to run is greater than a frequency at which the controller controls, when the total quantity of accumulated self-healing times is less than or equal to the first preset threshold, the smoke removal apparatus to run.

8. The power converter according to any one of claims 2 to 7, wherein the controller is further configured to:
when the total quantity of accumulated self-healing times is less than or equal to the first preset threshold, generate information indicating that the capacitor is in a slight self-healing state; or
when the total quantity of accumulated self-healing times is greater than the first preset threshold and less than the second preset threshold, generate information indicating that the capacitor is in a moderate self-healing state; or
when the total quantity of accumulated self-healing times is greater than or equal to the second preset threshold, generate information indicating that the capacitor is in a severe self-healing state.

9. The power converter according to any one of claims 2 to 8, wherein the controller is further configured to:
if a quantity of accumulated self-healing times that the capacitor undergoes self-healing within a period of time is greater than or equal to a third preset threshold, reduce the output power of the power converter, wherein the third preset threshold is less than or equal to the first preset threshold.

10. The power converter according to any one of claims 1 to 9, wherein the power conversion circuit comprises a plurality of operating cycles; and
when the capacitor meets a third preset condition once, the capacitor undergoes self-healing once, and the third preset condition comprises:
a largest value of a voltage change rate of the capacitor at adjacent time points in one of the operating cycles is greater than or equal to a preset voltage change rate threshold, and after falling in at least one of the operating cycles, a voltage of the capacitor restores to a voltage before falling; or
a largest value of an absolute value of a difference between a voltage value sampled by the capacitor in a current operating cycle and an average value of voltage values sampled in a previous operating cycle is greater than or equal to a preset voltage threshold, and after falling in at least one of the operating cycles, a voltage of the capacitor restores to a voltage before falling.
